(19) Europäisches Patentamt

European Patent Office

Office européen des brevets

(11) Veröffentlichungsnummer: **0 342 351 B1**

(12) **EUROPÄISCHE PATENTSCHRIFT**

(45) Veröffentlichungstag der Patentschrift:
**21.11.91 Patentblatt 91/47**

(21) Anmeldenummer: **89106249.9**

(22) Anmeldetag: **08.04.89**

(51) Int. Cl.⁵: **F16C 11/06**

(54) **Kugelgelenk.**

(30) Priorität: **14.05.88 DE 3816564**

(43) Veröffentlichungstag der Anmeldung:
**23.11.89 Patentblatt 89/47**

(45) Bekanntmachung des Hinweises auf die
Patenterteilung:
**21.11.91 Patentblatt 91/47**

(84) Benannte Vertragsstaaten:
**DE FR GB IT**

(56) Entgegenhaltungen:
**EP-A- 0 082 638**
**DE-A- 2 405 160**
**DE-A- 2 555 731**
**DE-A- 3 326 960**
**DE-U- 8 505 264**
**FR-A- 2 365 720**
**FR-A- 2 449 819**
**FR-A- 2 522 748**
**GB-A- 1 525 338**
**US-A- 3 154 333**

(73) Patentinhaber: **TRW Ehrenreich GmbH & Co.**
**KG**
**Hansa-Allee 190**
**W-4000 Düsseldorf 11 (DE)**

(72) Erfinder: **Ito, Eiichi**
**Feldstrasse 22**
**W-4005 Meerbusch 1 (DE)**
Erfinder: **Sieger, Karin**
**Im Sonnenschein 20**
**W-4156 Willich 2 (DE)**

(74) Vertreter: **Patentanwälte Dipl.-Ing. Alex**
**Stenger Dipl.-Ing. Wolfram Watzke Dipl.-Ing.**
**Heinz J. Ring**
**Kaiser-Friedrich-Ring 70**
**W-4000 Düsseldorf 11 (DE)**

## Beschreibung

Die Erfindung betrifft ein Kugelgelenk mit einem einen Kugelkopf und einen Gelenkzapfen aufweisenden Kugelzapfen, der von einer Lagerschale aus Kunststoff dreh- bzw. winkelbeweglich in einem topfartig ausgebildeten Gelenkgehäuse gehalten ist, wobei die Lagerschale eine Unterschale mit einer sich radial innen in Achsrichtung des Gelenkzapfens erstreckenden Ausnehmung mit einer darin eingesetzten weichelastischen Oberschale aufweist, die sich mit Stützflächen eines aus der Ausnehmung herausragenden Abschnitts axial an einem den Gehäuseboden bildenden Gehäuseverschluß abstützt, und wobei Unterschale und Oberschale gemeinsam eine sphärische Lagerfläche für den Kugelkopf bilden.

Für Lenkgetriebe von Kraftfahrzeugen werden vielfach Kugelgelenke benötigt, bei denen eine Lagerschalenhälfte eine große Radialelastizität aufweist. Die Radialelastizität kann durch Vergrößerung des Gehäuseinnendurchmessers und Verwendung eines weichen Kunststoffes gesteigert werden. Bei vergrößerte Gehäuseinnendurchmesser dehnt sich jedoch die bei der Montage stellenweise zusammengedrückte Lagerschale im Laufe der Zeit, so daß eine dauerhafte Radialelastizität nicht gewährleistet ist. Außerdem wirken sich Toleranzschwankungen des Gehäuseinnendurchmessers in erheblichem Maße auf die Radialelastizität direkt nach der Montage aus. Die vorstehenden Nachteile sind auch bei dem aus der DE-A-3326960 bekannten Kugelgelenk gegeben, welches eine zweiteilige Lagerschale mit einer Unterschale aus hartelastischem Werkstoff, z.B. Polyoxymethylen (POM), und eine Oberschale aus weichelastischem Werkstoff, z.B. Polyurethan (PUR), aufweist.

Aus der DE-A-2555731 ist bereits ein Kugelgelenk bekannt, bei dem eine Unterschale in einer zylindrischen Ausnehmung eine Oberschale aus PUR aufnimmt. Die Oberschale stützt sich mit einem zylindrischen Mantel in der Ausnehmung ab, so daß Toleranzschwankungen des Innendurchmessers der Unterschale die Radialelastizität der Oberschale beeinflussen. Jedoch wirken sich auch Schwankungen des Gehäuseinnendurchmessers weiterhin erheblich auf die Radialelastizität der Oberschale aus, weil sie wechselnde Verformungen der an der Gehäusebohrung anliegenden Unterschale bedingen, welche sich infolge der Dünnwandigkeit und geringen Elastizität der Unterschale in die Oberschale fortpflanzen. Darüber hinaus können sich Unterschale und Oberschale des vorbekannten Kugelgelenkes ungehindert gegeneinander verdrehen.

Der DE-A-2405160 ist ein Kugelgelenk mit einer Unterschale aus elastischem Werkstoff und einer Oberschale aus einem Elastomer entnehmbar, wobei die Oberschale in eine zylindrische Ausnehmung der Unterschale eingesetzt ist und beide Schalen gemeinsam eine sphärische Lagerfläche bilden. Die Oberschale ist mittels eines umlaufenden Steges mit der Unterschale verbunden, so daß Toleranzschwankungen des Gehäuseinnendurchmessers bzw. der Ausnehmung der Unterschale einen nur geringen Einfluß auf die Radialelastizität der Oberschale haben. Jedoch kann sich die Oberschale im Laufe der Zeit in der Ausnehmung radial fast unbehindert verformen und ihre Federwirkung verlieren, wodurch sich die Radialelastizität erheblich verändert.

Aus dem DE-U-8505264.7 und der EP-A-0082638 sind Kugelgelenke mit Lagerschalen bekannt, die im Äquatorbereich des Kugelkopfes außen umlaufende Nuten haben, die der Vergrößerung und gezielten Einstellung der Radialelastizität dienen. Die durch die Nuten bewirkte Vergrößerung der Radialelastizität ist jedoch nur gering. Zudem kann sich die aus einem weichelastischen Kunststoff, beispielsweise Polyurethan (PUR), hergestellte Lagerschale des Kugelgelenkes gemäß DE-GM 8505264.7 im Laufe der Zeit dehnen, womit erhebliche Änderungen der Radialelastizität einhergehen.

Davon ausgehend liegt der Erfindung die **Aufgabe** zugrunde, ein verbessertes Kugelgelenk zu schaffen, bei dem insbesondere eine große und dauerhafte Radialelastizität gewährleistet ist und sich Toleranzen des Gehäuseinnendurchmessers praktisch nicht auf die Radialelastizität auswirken.

Diese Aufgabe wird erfindungsgemäß dadurch gelöst, daß im unbelasteten Gelenkzustand zwischen dem Außenumfang der hartelastischen Unterschale und dem Gelenkgehäuse ein um die Achse des Gelenkzapfens umlaufender und ein radiales Verschieben der Unterschale ermöglichender Luftspalt ausgebildet ist, der in Achsrichtung des Gelenkzapfens von dem dem Gehäuseverschluß zugewandten Rand der Unterschale bis zu einer Stützfläche der Unterschale zu deren axialer Abstützung im Gelenkgehäuse nahe der Öffnung des Gelenkgehäuses für den Gelenkzapfen verläuft, daß die Oberschale (6) sich in der Ausnehmung (14) der Unterschale (5) axial und radial abstützt, und daß die Oberschale am Gehäuseverschluß mit den Stützflächen auch radial abgestützt ist.

Bei einem erfindungsgemäßen Kugelgelenk ist die Lagerschale mit Unterschale und Oberschale axial am Gelenkgehäuse und am Gehäuseverschluß abgestützt, wobei lediglich die Oberschale auch radial abgestützt ist. Zwischen Unterschale und Gelenkgehäuse ist hingegen ein Luftspalt ausgebildet, der ein radiales Verschieben der Unterschale bei einer Radialkraft auf den Kugelzapfen ermöglicht. Hierbei gleitet die Unterschale auf einer Stützfläche zu deren axialer Abstützung, wogegen sich die Oberschale elastisch verformt. Die Radialelastizität der Lagerschale wird deshalb maßgeblich von der weichelastischen Oberschale bestimmt. Im Vergleich zu herkömmlichen Kugelgelenken ist jedoch die Radialelastizität besonders groß, weil die radiale Beweglichkeit der Lagerschale durch den Luftspalt vergrößert ist. Erst wenn die Unterschale an dem Gehäuseinnendurchmesser anliegt, steigt die Radialelastizität der Lagerschale steil an. Auch Druckkräfte auf den Gelenkzapfen werden von der Oberschale elastisch aufgefangen. Ein erfindungsgemäßes Kugelgelenk weist eine dauerhafte Radialelastizität auf, weil die Unterschale aus hartelastischem Material nach jedem radialen Verschieben in ihre ursprüngliche Lage zurückkehrt und weil die Oberschale in einer Ausnehmung der Unterschale mit relativ kleinem Innendurchmesser untergebracht ist, in der eine nennenswerte Verformung der Oberschale im Laufe der Zeit nicht zu besorgen ist.

Ein weiterer Vorteil besteht darin, daß Schwankungen des Gehäuseinnendurchmessers im Bereich des Luftspaltes nicht durch die Wand der Unterschale hindurch auf die Oberschale und den Kugelkopf einwirken können. Vielmehr sind eine konstante Vorspannung des Kugelkopfes und toleranzarme Dreh- bzw. Kippmomente des Kugelgelenkes gewährleistet, weil die Ausnehmung der Unterschale aus Kunststoff mit relativ geringen Toleranzen gefertigt werden kann. Da die Oberschale nur geringfügig aus der Unterschale herausragt, werden Hohlräume weitestgehend vermieden, in die sich die Oberschale unabgestützt und unter Verlust ihrer Radialelastizität und Vorspannung hineinverformen könnte.

Die Lagerschale wird sowohl in radialer, als auch in axialer Richtung ausreichend geführt, wenn die Oberschale gemäß einer bevorzugten Ausgestaltung mit konischen Stützflächen an dem Gehäuseverschluß zentriert und abgestützt ist. Zusätzlich kann die Oberschale auch mit ebenen Stützflächen axial am Gehäuseverschluß abgestützt sein.

Bei einer weiteren Ausgestaltung ist die Oberschale mittels elastischer Rippen am Gehäuseverschluß abgestützt, was eine erhöhte Formelastizität der Oberschale insbesondere in axialer Richtung bedingt.

Die Unterschale kann Erhebungen aufweisen, welche in die weichelastische Oberschale eingedrückt werden und eine Verdrehsicherung bewirken. Diese verhindern, daß sich die Kennwerte des Kugelgelenkes infolge einer gegenseitigen Lageänderung der Lagerschalenhälften verändern. Bei einer bevorzugten Ausgestaltung sind die Erhebungen an einer Innenstufe der Ausnehmung der Unterschale ausgebildet, was eine Radialelastizität der Lagerschale praktisch nicht beeinträchtigt.

Schließlich ist bei einer Ausgestaltung der Erfindung vorgesehen, daß die Unterschale aus Polyoxymethylen (POM) bzw. die Oberschale aus Polyurethan (PUR) hergestellt sind. Polyoxymethylen weist als harter Thermoplast die im Rahmen der Erfindung für die Unterschale erforderlichen Eigenschaften auf, wogegen Polyurethan in dem erforderlichen Maße elastisch verformbar ist.

Weitere Einzelheiten und Vorteile des Gegenstandes der Erfindung ergeben sich aus der nachfolgenden Beschreibung der zugehörigen Zeichnungen, in denen eine bevorzugte Ausführungsform eines erfindungsgemäßen Kugelgelenkes dargestellt worden ist. In den Zeichnungen zeigen :

Fig. 1    ein Kugelgelenk mit einer elastische Rippen aufweisenden Oberschale im Längsschnitt ;
Fig. 2    dasselbe Kugelgelenk längsgeschnitten und im Sprengbild ;
Fig. 3    Oberschale desselben Kugelgelenkes in der Draufsicht ;
Fig. 4    dieselbe Oberschale in vergrößerter Detaildarstellung in Richtung IV der Fig. 2 gesehen ;
Fig. 5    Unterschale desselben Kugelgelenkes in der Draufsicht ;
Fig. 6    dasselbe Kugelgelenk im Längsschnitt und in vergrößerter Darstellung.

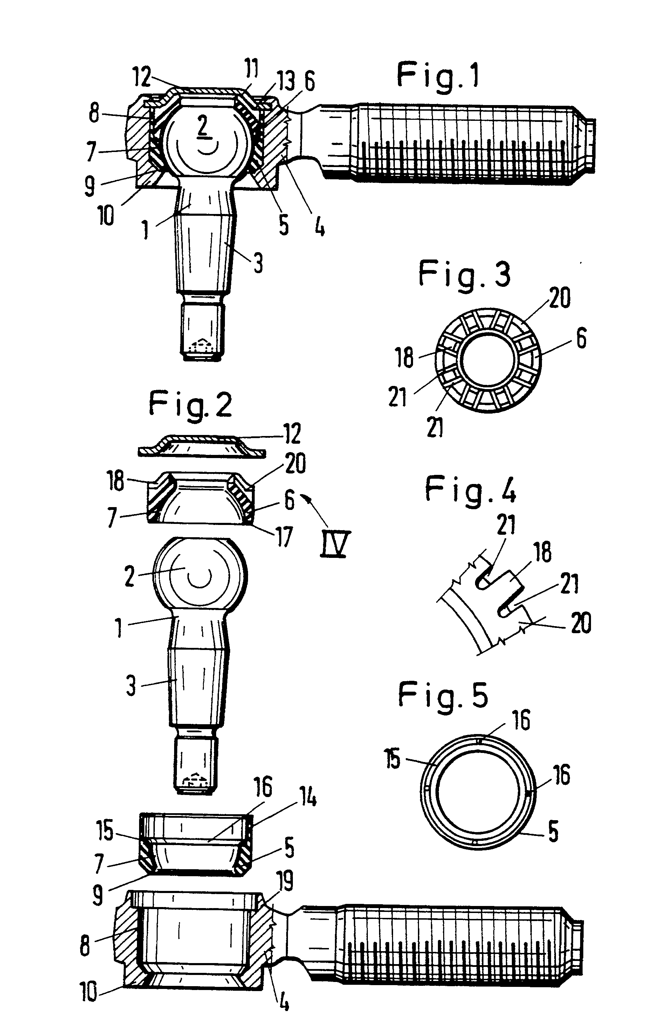

Die Fig. 1 zeigt ein Kugelgelenk, bei dem ein Kugelzapfen 1 mit einem Kugelkopf 2 und einem Gelenkzapfen 3 dreh- bzw. winkelbeweglich in einem Gelenkgehäuse 4 gehalten ist. Hierzu ist eine zweiteilige Lagerschale aus einer Unterschale 5 und einer Oberschale 6 vorgesehen, die gemeinsam eine sphärische Lagerfläche 7 für den Kugelkopf 2 bilden. Die Lagerschale ist in eine zylindrische Bohrung 8 des Gelenkgehäuses 4 eingesetzt. Die Unterschale 5 ist axial mit einer ebenen Stützfläche 9 an einer Gehäuseschulter 10 neben einer Öffnung des Gelenkgehäuses 4 für den Gelenkzapfen 3 abgestützt. Die Oberschale 6 ist axial und radial mit konischen Stützflächen 11 an einem Gehäusedeckel 12 abgestützt. Die Oberschale 6 hat außerdem ebene Stützflächen 13 zur Abstützung am Gehäusedeckel 12. Statt des Gehäusedeckels 12 kann ein anderer Gehäuseverschluß vorgesehen sein, insbesondere eine mit dem Gelenkgehäuse einteilig ausgebildete Stirnwand.

Wie besser aus der Fig. 2 ersichtlich ist, wird bei der Montage des Kugelgelenkes zunächst die Unterschale 5 in die Bohrung 8 des Gelenkgehäuses 4 eingesetzt. Hierbei stützt sich die Unterschale 5 mit ihrer stirnseitig ausgebildeten, ebenen Stutzfläche 9 an der Gehäuseschulter 10 ab, auf der sie radial verschoben werden kann.

Dann wird der Kugelzapfen 1 in die Unterschale 5 eingesetzt, so daß sein Kugelkopf 2 auf der Lagerfläche 7 der Unterschale 5 ruht und sein Gelenkzapfen 3 dreh- bzw. winkelbeweglich aus der von der Gehäuseschulter 10 umrandeten Öffnung des Gelenkgehäuses 4 herausragt.

Darauf wird die Oberschale 6 in eine zylindrische Ausnehmung 14 der Unterschale 5 eingesetzt, so daß

3

sie gemeinsam mit der Unterschale 5 eine den Kugelkopf 2 beidseitig des Äquators abstützende, sphärische Lagerschale 7 bildet. Die Unterschale 5 weist an einer Innenstufe 15 zur axialen Abstützung der Oberschale 6 winzige, nockenförmige Erhebungen 16 auf, welche unter Ausbildung entsprechender Vertiefungen 17 in die weichelastische Oberschale 6 eingedrückt werden können und eine Verdrehsicherung zwischen Unterschale 5 und Oberschale 6 bewirken.

Schließlich wird der ausgewölbte Gehäusedeckel 12 auf die konische, mit radial verlaufenden Rippen 18 versehene Stirnseite der Oberschale 6 aufgesetzt und durch Einwalzen eines Walzrandes 19 im Gelenkgehäuse 4 festgelegt. Zwischen den Rippen 18 sind Anschläge 20 ausgebildet, welche die Oberschale 6 vor einer axialen Überlast schützen.

Wie sich aus den Fig. 3 und 4 ergibt, sind beidseitig der Rippen 18 der Oberschale 6 Schlitze 21 angeordnet, in die sich die Rippen 18 bei axialer Belastung hineinverformen. Durch seitliche Anlage an den Seitenwänden der Schlitze 21 werden die Rippen 18 vor Knickung geschützt.

Aus der Fig. 5 ist ersichtlich, daß vier Erhebungen 16 in gleichmäßigem Abstand auf der Innenstufe 15 der Unterschale 5 angeordnet sind.

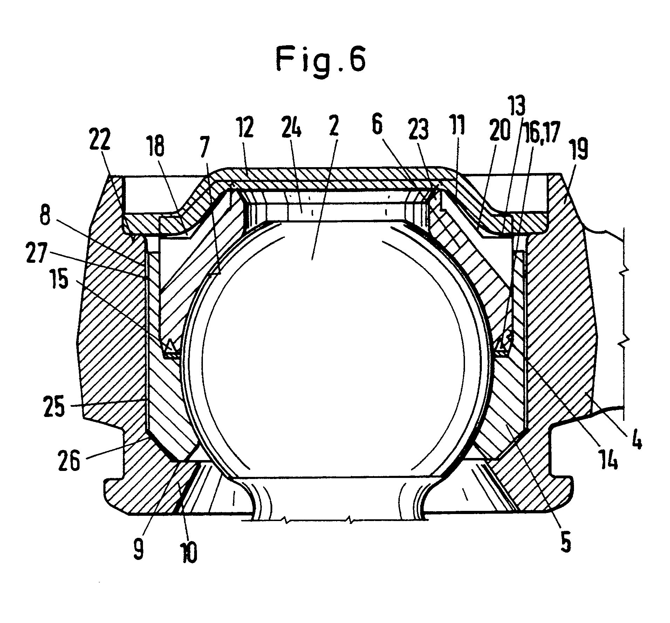

Weitere Einzelheiten der Lagerschalenkonstruktion werden anhand der Fig. 6 erörtert. Diese zeigt das Kugelgelenk unmittelbar vor dem Festlegen des Gehäusedeckels 10 durch Einwalzen des Walzrandes 19. In dieser Endlage stützt sich der Gehäusedeckel 12 auf einer Schulter 22 des Gelenkgehäuses 4 ab.

Die Rippen 18 der Oberschale 6 liegen bei aufgesetztem Gehäusedeckel 12 an dessen Innenseite an. In der Fig. 6 sind sie zusätzlich in ihrer unverformten Lage ohne Gehäusedeckel 12 eingezeichnet. Hieran wird deutlich, daß der Verformungsweg der Rippen 18 erheblich ist und einen guten Ausgleich von Maßtoleranzen sowie eine dauerhafte elastische Vorspannung bedingt. Stirnseitig hat die Oberschale 6 eine umlaufende Dichtlippe 23, welche ebenfalls an dem Gehäusedeckel 12 anliegt und ein Austreten eines Schmiermittels aus einem Schmiermittelreservoir 24 verhindert.

Die Anschläge 20 der Oberschale 6 sind bei dem unbelasteten Kugelgelenk von dem Gehäusedeckel 12 beabstandet, so daß stoßförmige Belastungen über einen Verformungsweg der Rippen 18 aufgefangen werden, bevor die Anschläge 20 zur Anlage kommen.

Die Oberschale 6 hat auch in der Ausnehmung 14 der hartelastischen Unterschale 5 ein geringfügiges Übermaß, was in der Fig. 6 durch eine gegenüber der Innenstufe 15 etwas versetzte Linie dargestellt ist. Dieses Übermaß wird durch axiale Verformung der Oberschale 6 auch in der Ausnehmung 14 ausgeglichen.

Die Erhebungen 16 und Vertiefungen 17 bewirken außer einer Verdrehsicherung auch eine Zentrierung von Unterschale 5 und Oberschale 6, so daß eine sehr maßhaltige Lagerfläche 7 bereitgestellt wird. Zur Verdrehsicherung zwischen der Lagerschale 5, 6 und dem Gelenkgehäuse 4 reichen das Übermaß der Unterschale 5 und der Oberschale 6 in der Gehäuseaufnahme aus.

Zwischen einem zylindrischen Mantel 25 sowie einem konischen Mantel 26 der Unterschale 5 und der Bohrung 8 des Gelenkgehäuses 4 ist ein um die Zapfenachse des Gelenkzapfens umlaufender Luftspalt 27 ausgebildet. Der konische Mantel 26 ermöglicht eine ausreichende Wandstärke des Gelenkgehäuses 4 nahe der Öffnung für den Gelenkzapfen 3. Der Luftspalt 27 erstreckt sich in Zapfenachsrichtung zwischen den ebenen Stützflächen 9 und 13 der Lagerschale. Hieraus ergibt sich, daß die Lagerschale ausschließlich stirnseitig an der Gehäuseschulter 10 und dem Gehäusedeckel 12 abgestützt und über ihre konischen Stützflächen 11 zentriert ist. Bei radialen Belastungen wird die Oberschale 6 elastisch verformt, wobei die Unterschale 5 seitlich ausweicht. Wenn die Unterschale 5 an der Bohrung 8 anliegt ist die Oberschale 6 vor einer übermäßigen Verformung geschützt. Maßschwankungen der Bohrung 8 des Gelenkgehäuses 4 haben praktisch keinen Einfluß auf die Federwirkung und Radialelastizität der Oberschale 6 und das Drehmoment des Kugelgelenkes.

## Bezugszeichenliste

| 1 | Kugelzapfen |
| 2 | Kugelkopf |
| 3 | Gelenkzapfen |
| 4 | Gelenkgehäuse |
| 5 | Unterschale |
| 6 | Oberschale |
| 7 | Lagerfläche |
| 8 | Bohrung |
| 9 | Stützfläche (ebene) |
| 10 | Gehäuseschulter |
| 11 | Stützfläche (konische) |
| 12 | Gehäusedeckel |

13 Stützfläche (ebene)
14 Ausnehmung
15 Innenstufe
16 Erhebung
17 Vertiefung
18 Rippe
19 Walzrand
20 Anschlag
21 Schlitz
22 Schulter
23 Dichtlippe
24 Schmiermittelreservoir
25 Mantel (zylindrisch)
26 Mantel (konisch)
27 Luftspalt

## Patentansprüche

1. Kugelgelenk mit einem einen Kugelkopf (2) und einen Gelenkzapfen (3) aufweisenden Kugelzapfen (1), der von einer Lagerschale aus Kunststoff dreh- bzw. winkelbeweglich in einem innen topfartig ausgebildeten Gelenkgehäuse (4) gehalten ist, wobei die Lagerschale eine Unterschale (5) mit einer sich radial innen in Achsrichtung des Gelenkzapfens (3) erstreckenden Ausnehmung (14) mit einer darin eingesetzten weichelastischen Oberschale (6) aufweist, die sich mit Stützflächen (11, 13) eines aus der Ausnehmung (14) herausragenden Abschnitts axial an einem Gehäuseverschluß (12) abstützt, und wobei Unterschale (5) und Oberschale (6) gemeinsam eine sphärische Lagerfläche (7) für den Kugelkopf (2) bilden, **dadurch gekennzeichnet,** daß im unbelasteten Gelenkzustand zwischen dem Außenumfang der hartelastischen Unterschale (5) und dem Gelenkgehäuse (4) ein um die Achse des Gelenkzapfens (3) umlaufender und ein radiales Verschieben der Unterschale (5) ermöglichender Luftspalt (27) ausgebildet ist, der in Achsrichtung des Gelenkzapfens (3) von dem dem Gehäuseverschluß zugewandten Rand der Unterschale (5) bis zu einer Stützfläche (9) der Unterschale (5) zu deren axialer Abstützung im Gelenkgehäuse (4) nahe der Öffnung des Gelenkgehäuses für den Gelenkzapfen (3) verläuft, daß die Oberschale (6) sich in der Ausnehmung (14) der Unterschale (5) axial und radial abstützt, und daß die Oberschale am Gehäuseverschluß mit den Stützflächen (11, 13) auch radial abgestützt ist.

2. Kugelgelenk nach Anspruch 1, dadurch gekennzeichnet, daß die Oberschale (6) mit konischen Stützflächen (11) an dem Gehäuseverschluß (12) abgestützt ist.

3. Kugelgelenk nach einem der Ansprüche 1 oder 2, dadurch gekennzeichnet, daß die Oberschale (6) mittels elastischer Rippen (18) am Gehäuseverschluß (12) abgestützt ist.

4. Kugelgelenk nach einem der Ansprüche 1 bis 3, dadurch gekennzeichnet, daß die Unterschale (5) eine Verdrehsicherung bewirkende Erhebungen (16) aufweist.

5. Kugelgelenk nach Anspruch 4, dadurch gekennzeichnet, daß die Erhebungen (16) an einer Innenstufe (15) der Ausnehmung (14) der Unterschale (5) ausgebildet sind.

6. Kugelgelenk nach einem der Ansprüche 1 bis 5, dadurch gekennzeichnet, daß die Unterschale (5) aus Polyoxymethylen (POM) bzw. die Oberschale (6) aus Polyurethan (PUR) hergestellt sind.

## Claims

1. Ball joint with a ball pivot (1) which has a ball head (2) and a link pin (3) and which is held by a plastic bearing shell in an internally pot-like joint housing (4) so as to be rotationally and angularly moveable, the bearing shell having a lower shell (5) with a recess (14) extending radially on the inside in the axial direction of the link pin (3) and having a soft-elastic upper shell (6) which is inserted into this and which is supported axially on a housing closure (12) by means of supporting faces (11, 13) of a portion projecting from the recess (14), and the lower shell (5) and upper shell (6) together constituting a spherical bearing face (7) for the ball head (2), characterised in that, in the non-loaded state of the joint, between the outer circumference of the hard-elastic lower shell (5) and the joint housing (4) there is formed an air gap (27) which is continuous about the axis of the link pin (3) and allows a radial displacement of the lower shell (5) and which extends in the axial direction of the link pin (3) from the edge of the lower shell (5) facing the housing closure to a supporting face (9) of the

5

lower shell (5) for its axial support in the joint housing (4) near the orifice of the joint housing for the link pin (3), in that the upper shell (6) is supported axially and radially in the recess (14) of the lower shell (5), and in that the upper shell is also supported radially on the housing closure by means of the supporting faces (11, 13).

2. Ball joint according to Claim 1, characterised in that the upper shell (6) is supported on the housing closure (12) by means of conical supporting faces (11).

3. Ball joint according to one of Claims 1 or 2, characterised in that the upper shell (6) is supported on the housing closure (12) by means of elastic ribs (18).

4. Ball joint according to one of Claims 1 to 3, characterised in that the lower shell (5) has elevations (16) providing rotation prevention.

5. Ball joint according to Claim 4, characterised in that the elevations (16) are formed on an inner step (15) of the recess (14) of the lower shell (5).

6. Ball joint according to one of Claims 1 to 5, characterised in that the lower shell (5) is made from polyoxymethylene (POM) and the upper shell (6) from polyurethane (PUR).


## Revendications

1. Articulation à rotule comprenant une tige (1) de rotule, comportant une tête sphérique (2) et une tige (3) d'articulation, qui est renfermée par un coussinet en matière plastique dans lequel elle peut effectuer des mouvements de rotation et angulaires dans une cage (4) d'articulation conformée intérieurement en boisseau, le coussinet comportant une coquille inférieure (5) présentant une cavité (14) orientée radialement à l'intérieur dans la direction de l'axe de la tige (3) d'articulation et dans laquelle est insérée une coquille supérieure élastique et souple (6) qui s'applique axialement par des surfaces d'appui (11, 13) faisant saillie vers l'extérieur de la cavité (14) contre un élément de fermeture (12) de la cage et la coquille inférieure (5) ainsi que la coquille supérieure (6) formant ensemble une surface sphérique (7) de support de la tête sphérique (2), caractérisée en ce que lorsque l'articulation n'est pas sous charge, un interstice (27) entourant l'axe de la tige d'articulation (3) et permettant un déplacement radial de la coquille inférieure (5) est ménagé entre la périphérie extérieure de la coquille inférieure (5) élastique et dure et la cage (4) de l'articulation, cet interstice (27) allant, dans la direction de l'axe de la tige (3) de l'articulation, du bord de la coquille inférieure (5) qui est tourné vers l'élément de fermeture de la cage jusqu'à une surface d'appui (9) de la coquille inférieure (5) dans la cage (4) d'articulation qui est destinée à l'appui axial de cette dernière et qui est proche de l'ouverture de la cage de l'articulation ménagée pour la tige (3) de l'articulation, en ce que la coquille supérieure (6) s'appuie axialement et radialement dans la cavité (14) de la coquille inférieure (5) et en ce que la coquille supérieure s'applique aussi radialement par les surfaces d'appui (11, 13) contre l'élément de fermeture de la cage.

2. Articulation à rotule selon la revendication 1, caractérisée en ce que la coquille supérieure (6) s'applique par des surfaces d'appui coniques (11) contre l'élément de fermeture (12) de la cage.

3. Articulation à rotule selon l'une des revendications 1 ou 2, caractérisée en ce que la coquille supérieure (6) s'appuie par des nervures élastiques (18) contre l'élément de fermeture (12) de la cage.

4. Articulation à rotule selon l'une des revendications 1 à 3, caractérisée en ce que la coquille inférieure (5) comporte des protubérances (16) constituant des arrêts interdisant toute rotation.

5. Articulation à rotule selon la revendication 4, caractérisée en ce que les protubérances (16) sont réalisées sur un épaulement interne (15) de la cavité (14) de la coquille inférieure (5).

6. Articulation à rotule selon l'une des revendications 1 à 5, caractérisée en ce que la coquille inférieure (5) est réalisée en polyoxyméthylène (POM) et la coquille supérieure (6), en polyuréthanne (PUR).

Fig.1

Fig.2

Fig.3

Fig.4

Fig.5

## Fig.6